# FASCICULE DE BREVET EUROPEEN

(11) **EP 2 010 427 B1**
(45) Date de publication et mention de la délivrance du brevet: **14.10.2009**
(21) Numéro de dépôt: 07731210.6
(22) Date de dépôt: 27.03.2007
(51) Int. Cl.: B62M 1/04

(54) **BICYCLETTE EQUIPE AVEC UN SYSTEME DE PEDALIER-MANIVELLE ET PROPULSE PAR LE CONDUCTEUR PAR SES PIEDS EN MOUVEMENT ALTERNATIF VERTICAL RECIPROQUE**
MIT EINER TRETKURBEL VERSEHENES UND DURCH DEN FAHRER MIT SICH HOCH UND RUNTER BEWEGENDEN FÜSSEN ANGETRIEBENES FAHRRAD
BICYCLE EQUIPPED WITH A PEDAL CRANK AND PROPELLED BY THE RIDER WITH HIS FEET MOVING UP AND DOWN

(30) Priorité: 27.03.2006 FR 0602650
(43) Date de publication de la demande: 07.01.2009
(73) Titulaire: Sakirov, Pavel-Tivadar, 75015 Paris (FR)
(72) Inventeur: Sakirov, Pavel-Tivadar, 75015 Paris (FR)
(74) Mandataire: Texier, Christian
(86) Numéro de dépôt international: PCT/FR2007/000529
(87) Numéro de publication internationale: WO 2007/110513

(56) Documents cités:
- WO-A1-02/30732
- DE-A1- 10 125 645
- DE-C- 54 968
- FR-A- 415 887
- FR-A- 2 382 368
- FR-A- 2 726 532
- US-A- 608 674
- US-A- 1 505 271
- US-A- 2 383 000
- US-A- 4 561 668
- US-A- 4 666 173
- US-A- 5 403 027

## Description

La présente invention concerne un nouveau deux roues équipé avec une système de pédalier propulsé par les pieds du conducteur qui transforme le mouvement de translation alternatif vertical réciproque èn un mouvement de rotation unidirectionnelle.

Le document WO 0230732 divulgue un système de transmission pour cycles selon le préambule de la revendication 1.

Les véhicules à deux roues classiques dits bicyclettes propulsés par le conducteur ne sont pas efficaces pour le grand public. Notamment parce qu'ils ne sont pas "propulsibles" à haute vitesse et inconfortables pendant le pédalage lors de l'ascension sur des pentes fortes.

Cette nouvelle bicyclette permet de produire plus de performance avec la même force investie que dans une bicyclette classique.

Ce véhicule à deux roues est équipé d'un système de pédalier qui permet de transmettre un moment de force supérieure grâce à la longueur élevée de la manivelle-crémaillère du pédalier.

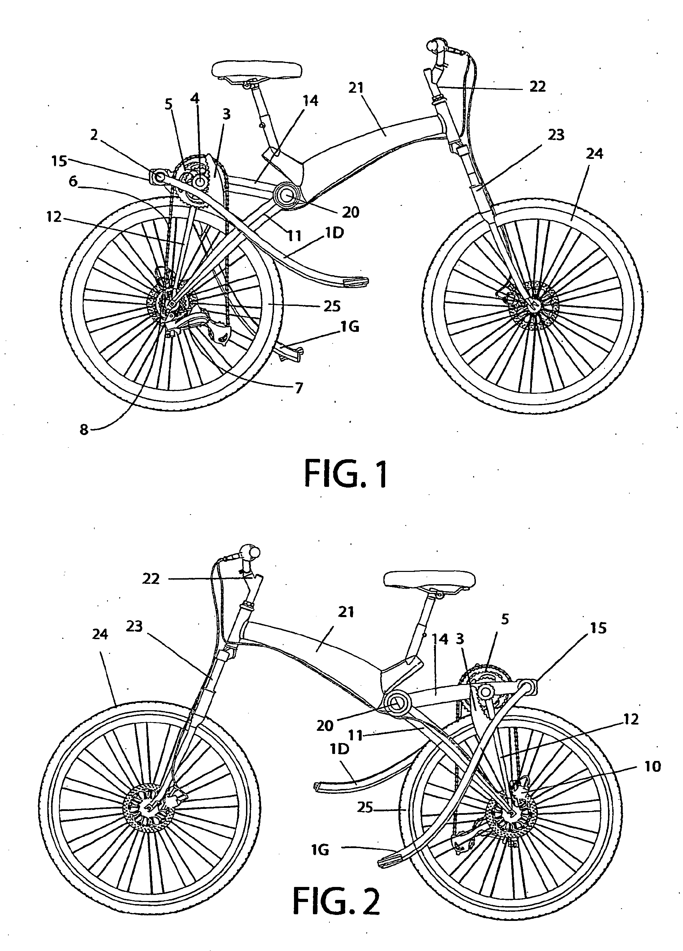

La transmission des forces générées par les pieds du conducteur en poussant verticalement l'un des pédaliers de la bicyclette (fig. 1,-2,-3,-4,-5,-6) vers le bas, est résolue avec une crémaillère (3) fixée sur ces manivelles-pédaliers (1D-pour le pédalier Droit, 1G-pour le pédalier Gauche) et actionne le pignon de la couronne (4) fixée sur l'axe tournant de la couronne (5), en faisant avancer la roue arrière (25) par une liaison de la chaîne (6) moyennant les cassettes de pignon(s) (8) de la roue arrière.

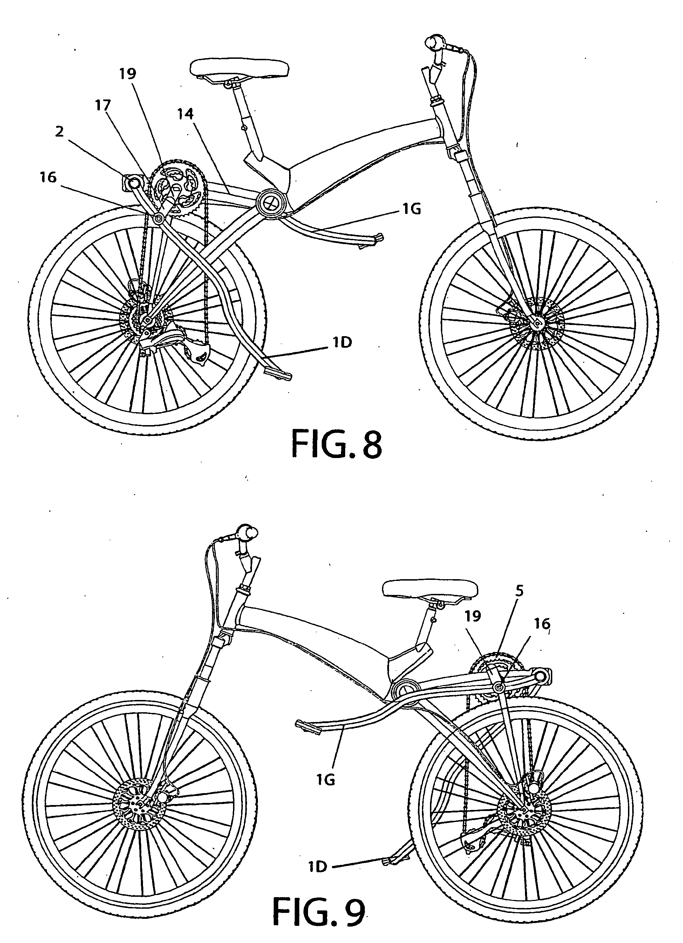

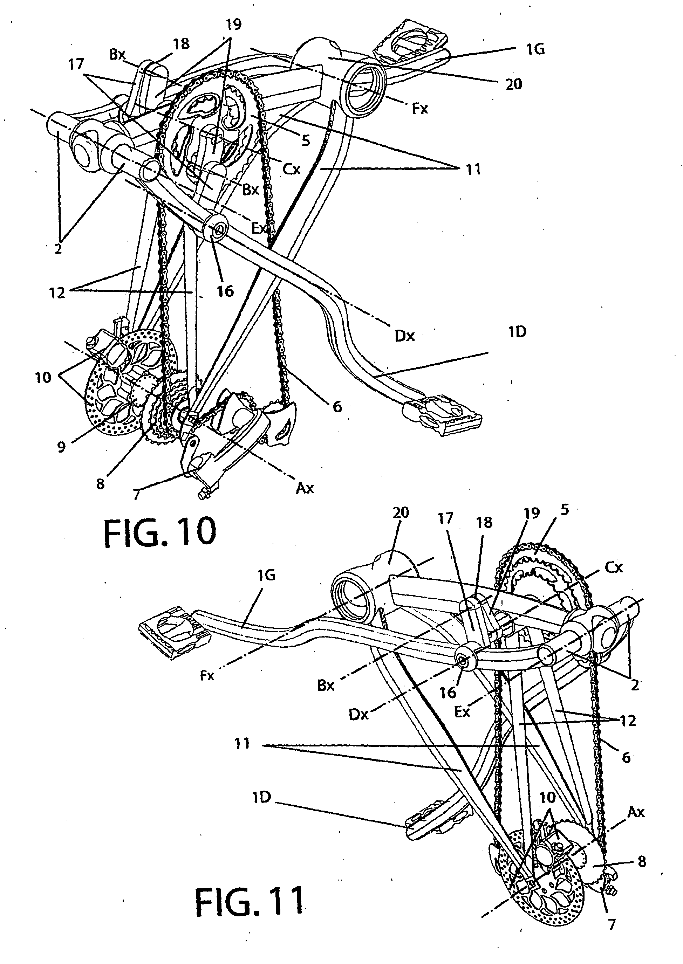

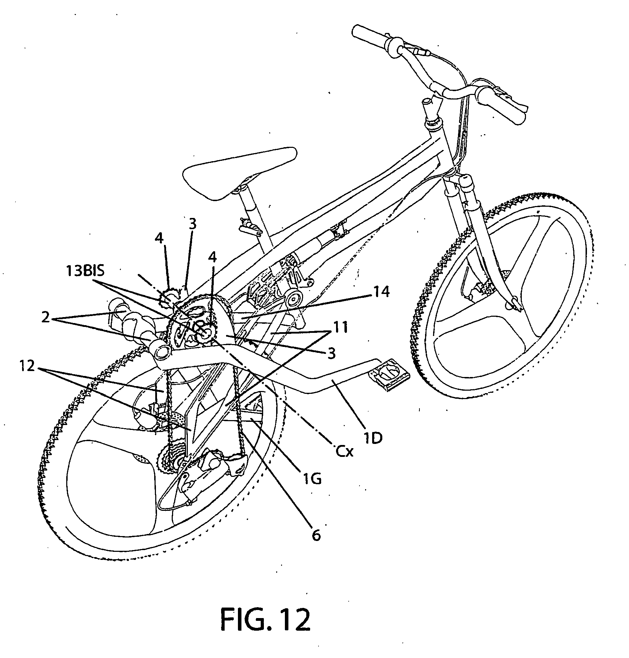

Afin d'assurer que les pédaliers-manivelles (1D, 1G) puissent décrire un mouvement alternatif de va-et-vient vertical réciproque et qu'un pédalier soit toujours accessible en haut pour un poussement de pied par le conducteur sans être obligé de repousser le pédalier par le conducteur en faisant deux efforts musculaire contrôlés, un dispositif de boite de jeux différentiel à plusieurs pignons coniques ou non-coniques (15) a été positionnées. par. ex.: quand le pédalier gauche monte obligeant à tourner vers l'arrière son pignon différentiel, les récepteurs pignons différentiels font descendre le pédalier droit par ses propres pignons différentiels devenus capteurs, et puis à l'envers en continu. Dans la solution pédalier manivelle-bielle où le système de boîtier avec le jeu différentiel n'est pas présent, pour faire avancer le bicyclette, le conducteur doit démarrer la progression en appuyant sur le pédalier se trouvant plus en haut. (sur la fig.8,-9,-10,-11 c'est le pédalier gauche)

Plus les manivelles-pédaliers (1D, 1G) ont une longueur élevée, plus le développement permet d'être adapté à une progression dans les pentes fortes.

Selon des modes particuliers de réalisation de ce véhicule à deux roues propulsé par le conducteur :
- la crémaillère (3) peut être remplacée par un système de bielle-manivelle (fig. 8,-9,-10,-11) pour transformer le mouvement de translation en va-vient vertical en un mouvement de rotation.

Ce système comporte une bielle intermédiaire pivotant sur un axe (Dx) se trouvant sur les manivelles de pédalier (18), et une deuxième bielle (17) tournant avec les couronnes autour sur l'axe central des plateaux (Cx) de couronnes (5). La bielle-intermédiaire pivotante et la bielle du plateau de la couronnes s'articulent (18) librement sur un axe (Bx) pouvant tourner sans faire propulser vers l'arrière grâce au système de roue libre unidirectionnelle des cassettes. Cette éventuelle solution technique de transmission permet de réciproquement repousser le pédalier déjà se trouvant bas et après un tour de la couronne vers l'avant, se trouvant en haut sans avoir besoin d'installer un système de jeu différentiel à plusieurs pignons coniques ou non-coniques, selon les fig. 1. et fig. 2.

Pour offrir à l'usager une large marge de choix de vitesse adaptée à un confort maximal pour ce véhicule à crémaillère-manivelles pédalier (fig. 1.-2.-3.-4) ou bielle-manivelle pédalier propulsé par le conducteur pendant les efforts musculaires, les couronnes de transmission peuvent être installées en plusieurs diamètres (5) et avec plusieurs nombres de dents afin d'obtenir plusieurs vitesses par un dérailleur de couronnes.

Pour la solution technique de propulsion à bielle-manivelle pédalier, le récepteur bielle (19) peut être équipé par un dispositif de rallonge ajustable pour permettre d'augmenter ou de diminuer la longueur de ce dernier et remplacer les différents diamètres des plateaux de couronnes qui servent à changer les vitesses. En augmentant ou diminuant la longueur de cette bielle, les distance entre les axes de rotation changent et les moments de force peuvent être différents. En augmentant la longueur de la bielle de plateau, l'énergie investie dans la propulsion augmente aussi grâce au moment de force. En diminuant cette distance, la propulsion à haute vitesse est possible en translatant les pédaliers moins rapidement.

La longueur des mouvements verticaux des bielle-manivelles pédaliers (1D, 1G) est délimitée par la distance entre les axes tournant de ces deux parties du mécanisme (17,19) et aussi la distance entre l'axe central (Ex) des bielles-manivelles pédalier et l'axe de rotation central de la couronne (Cx).

Le cadre de cette bicyclette est composé de deux parties distinctes:
- La partie avant avec le jeu de direction et la fourche (téléscopique éventuellement),le tout formant un ensemble avec le cadre qui peut être en monocoque (21, 22, 23);
- La deuxième partie comprend la fourche arrière (11), le tube supérieur du cadre arrière (14) qui inclut l'axe horizontal (Cx), le boîtier de jeu différentiel (15) pour assurer le réciprocité des mouvements verticaux des pédaliers, et la fourche de renforcement (12) qui reprend les contraintes élevées provenant du tube supérieur du cadre arrière en répartissant les forces au niveau du centre de fixation de la roue arrière.

L'ensemble du cadre avant monocoque (21,22,23) et le cadre arrière peuvent être joints au niveau de l'axe intermédiaire (Fx). Celui-ci peut pivoter horizontalement en incluant le système d'amortissement assemblé avec la méthode technique d'assemblage, dits "têtes fendues". La tête (20) de pivot du cadre arrière principal est taillé de manière à ce que la tête du cadre monocoque s'y insère. Pour cela, soit la tête principale est en monobloc et la tête secondaire démontable, soit la tête principale est démontable en deux parties et la tête secondaire est monobloc. Ces solutions permettent l'utilisation d'un assemblage de cadres différents avec une même pièce principale. Par ex.: on peut changer le cadre principal ou le cadre monocoque avant pour obtenir un autre type de bicyclette (multi-assemblage).

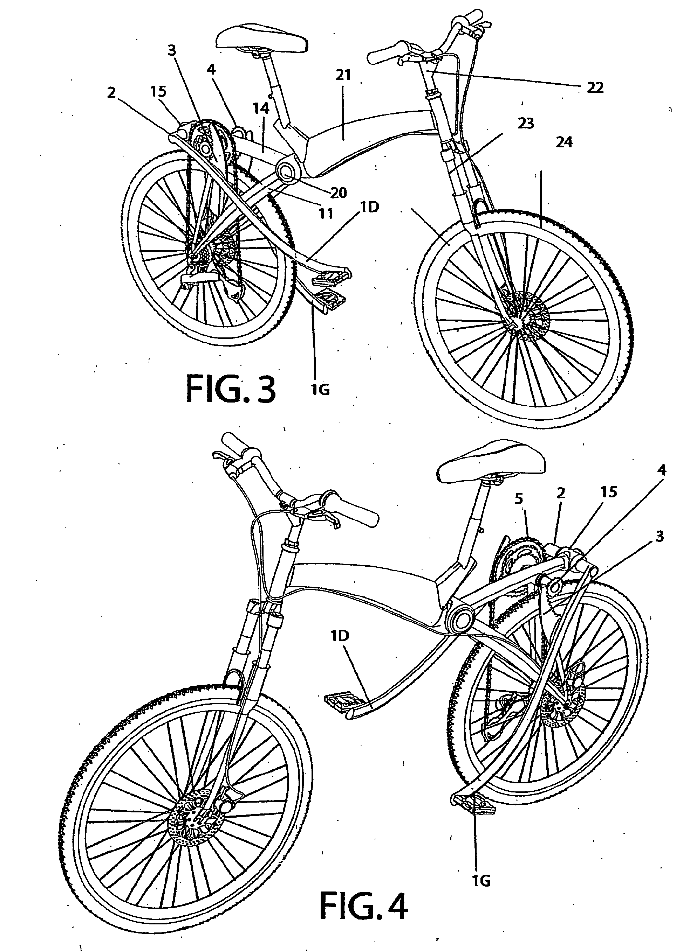

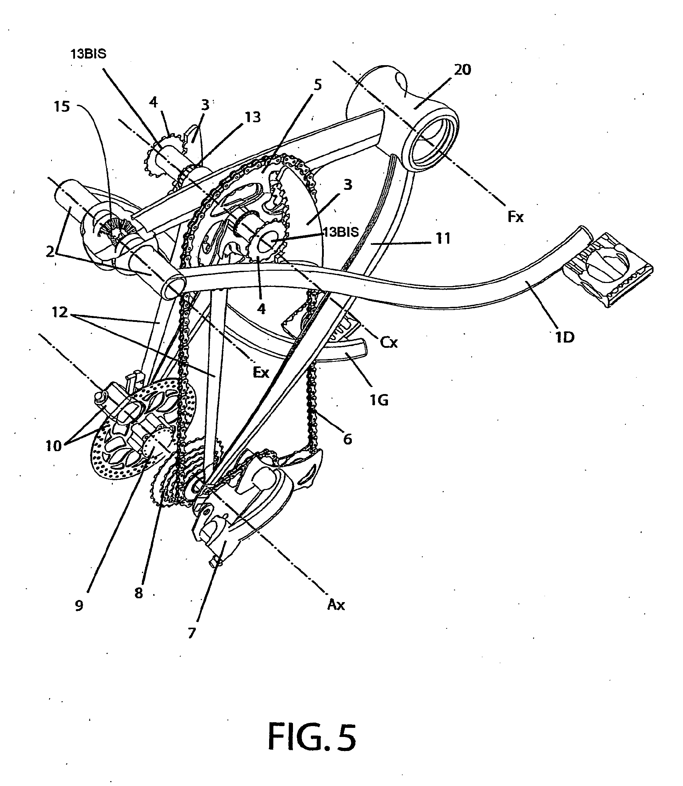

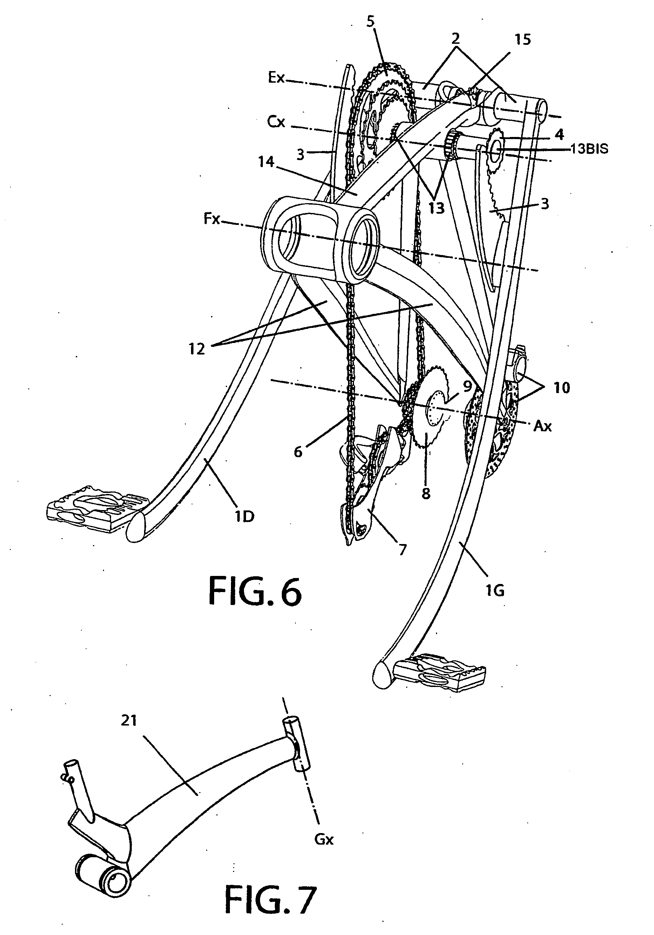

Le tube horizontal inclut deux systèmes indépendants de moyeux de transmission, qui sont liés au plateau de couronnes permettant de propulser les couronnes vers l'avant.(13 ou 13BIS). Le principe de ce mécanisme s'applique dans deux directions : quand l'une des deux crémaillères monte grâce au jeu différentiel des pignons (15) intégrés dans l'axe central rotatif-pivotant des pédaliers (Ex), l'autre pédalier est chargé par la force de l'utilisateur de la bicyclette, et propulsé vers l'avant les plateaux des couronnes. La crémaillère montante fait tourner à l'inverse le jeu de transmission unidirectionnelle - roue libre (13 ou 13BIS), et ne participe donc pas à la propulsion en tournant dans l'autre sens. Côté plateau de couronnes le système de roue libre - unidirectionnelle agit de la même façon quand la crémaillère correspondant le fait tourner vers l'arrière. Sur les fig.1, fig.2, fig.3, fig.4, le pédalier droit est en position haute. En descendant le pédalier de la crémaillère droite propulse le pignon du plateau de couronnes avec l'ensemble de la chaîne et le moyeu de transmission de la roue arrière. Dans le même temps le pédalier gauche remonte et fait tourner à l'inverse le système de roue libre unidirectionnelle.

Pour empêcher les pédaliers crémaillères de se désolidariser du pignon (4) de la couronnes,et afin de délimiter la trajectoire des manivelles de pédalier, un dispositif de frein antirotation a été intégré dans le jeu de différentiel des pignons (15). Le freinage se fait à partir d'une certaine limite de inclinaison du pédalier avec des dents spécialement placées sur les pignons.

Pour un mode particulier afin d'éviter le système de jeu différentiel des pignons, la manivelle-pédalier peut être réalisée avec un système bielle-manivelle comme tel: les bielles de la couronne (19) fixées avec le plateau de la couronne (5), et propulsées autour de l'axe Bx (liaison articulée) (18) par la bielle intermédiaire (17) qui pivote sur l'axe du boîtier d'articulation (16).

La solution du pédalier bielle-manivelle n'est pas équipée de transmissions unidirectionnelles - roue libre au niveau du plateau de couronnes. Ce dernier peut tourner librement autour de son axe vers l'avant et l'arrière. La seule transmission unidirectionnelle - roue libre est intégrée dans les jeu de cassettes (8) permettant la propulsion uniquement vers l'avant.

L'ensemble du cadre arrière portant les systèmes de propulsion, pivote autour de l'axe Fx utilisant un système d'amortissement intégrés dans la tête de cadre (20) ou un système d'amortissement extérieur fixé sur la partie du cadre. Le cadre avant est assemblé en incluant le monocoque (21) et l'axe rotatif Gx ou la fourche avant (22) avec l'amortissement de choc et la roue avant (24), tournent en définissant la direction de l'avancement de bicyclette.

## Revendications

1. Système de transmission pour cycles comportant :
- un cadre avant (21) comprenant une tête de cadre (20) ;
- une fourche arrière (11) montée sur la tête de cadre (20);
- un tube supérieur de cadre arrière (14) fixé sur la tête de cadre (20) et incluant un premier axe (Cx), transversal à l'axe du tube supérieur ;
- des bras manivelles de pédaliers (1D;1G) articulés à l'extrémité d'arbres (2) lesquels sont montés sur une extrémité du tube supérieur de cadre arrière (14) ;
- une chaîne (6) destinée à transmettre la puissance entre un plateau (5) et des cassettes de pignons (8) montées sur une roue arrière (25) ;
- un dispositif d'accouplement (3 , 4, 5, 13, 13BIS, 15, 17, 19) pour transformer un mouvement alternatif des bras manivelles (1D ;1G) en un mouvement de rotation du ou des plateau(x) (5) transmis à la roue arrière (25) par l' intermédiaire de la chaîne (6) et des cassettes de pignons (8)
**caractérisé en ce que**
un ou plusieurs plateau(x)-couronne(s) (5) est (sont) monté(s) en rotation autour de l'axe (Cx) transversal à l'axe du tube supérieur de cadre arrière (14) et **en ce que** ledit dispositif d'accouplement est disposé entre les bras manivelles (1D, 1G) et l'axe (Cx) transversal à l'axe du tube supérieur de cadre arrière

2. Système de transmission selon la revendication 1, **caractérisé en ce que** l'accouplement comprend:
- deux crémaillères (3) fixées respectivement sur l'un des bras manivelles (1D;1G) et venant en prise avec une couronne respective (13BIS) de pignons (4) liée en rotation autour de l'axe (Cx) transversal à l'axe du tube supérieur de cadre arrière (14) avec un plateau couronne (5) par l'intermédiaire d'un système de roues libres (13) respectif pouvant se placer dans les pignons (4) de la couronne (13BIS) associée ;
- un système de différentiel (15) agencé à l'arrière du tube (14) de manière à assurer la réciprocité des mouvements verticaux des bras manivelles (1D ; 1 G).

3. Système de transmission pour cycles selon la revendication 1 **caractérisé en ce que** l'accouplement est formé de :
- deux premières bielles (17) articulées respectivement sur les bras manivelles (1D ;1G) autour d'un deuxième axe (Dx) au moyen d'un boitier d'articulation (16),
- deux secondes bielles (19), articulées à une extrémité par rapport aux premières bielles (17) autour d'un troisième axe (Bx) et dont la seconde extrémité entraine en rotation le ou les plateau(x) couronne (5) autour du premier axe (Cx).

4. Système de transmission selon la revendication 1, **caractérisé en ce que** la tête de cadre (20) loge un dispositif d'amortissement.

5. Système de transmission selon la revendication 1, **caractérisé en ce que** l'accouplement comprend:
- deux chaînes (3) fixées respectivement sur l'un des bras manivelles (1D ;1G) et venant en prise avec une couronne respective (13BIS) de pignons (4) liée en rotation autour de l'axe (Cx) transversal à l'axe du tube supérieur de cadre arrière (14) avec un plateau couronne (5) par l'intermédiaire d'un système de roues libres (13) respectif pouvant se placer dans les pignons (4) de la couronne (13BIS) associée ;
- un système de différentiel (15) agencé à l'arrière du tube (14) de manière à assurer la réciprocité des mouvements verticaux des bras manivelles (1D ; 1G).

## Claims

1. A transmission system for cycles, comprising:
- a front frame (21) that includes a frame head (20);
- a rear fork (11) mounted on the frame head (20);
- a rear frame top tube (14) fixed onto the frame head (20) and including a first axis (Cx), transverse to the so-called top tube axis;
- pedal-crank arms (1D, 1G) articulated to the ends of shafts (2), with the latter being mounted on one end of the rear frame top tube (14);
- a chain (6) intended to transmit the power between a ring-gear (5) and the bracket set (8) mounted on the rear wheel (25) ;
- a coupling device (3, 4, 5, 13; 13bis, 15, 17, 19) for transforming an alternating movement of the pedal-crank arms (1D, 1G) into a rotational movement of the ring-gear or gears (5) transmitted to the rear wheel (25) by means of the chain (6) and the bracket set (8),
**characterised in that** one or more ring-gear(s) (5) is (are) rotatably mounted on axis (Cx) transverse to the axis of the rear frame top tube (14); and **in that** said coupling device is positioned between the pedal-crank arms (1D, 1G) and axis Cx, transverse to the axis of the rear frame top tube.

2. A transmission system according to claim 1,
**characterised in that** the coupling includes:
- two racks (3) fixed respectively on one of the pedal-crank arms (1D, 1G) and mating with a pinion set (13bis, 4) linked in rotation around axis (Cx) transverse to the axis of the rear frame top tube (14) with a ring-gear ring gear (5) by means of a freewheel system (13) that can be placed in the pinions (4) of the associated ring gear (13bits);
- a differential system (15) arranged at the rear of the tube (14) so as to ensure reciprocity of the vertical movements of the pedal-crank arms (1D, 1G).

3. A transmission system for cycles according to claim 1, **characterised in that** the coupling is formed of:
- two first connecting-rods (17) articulated respectively on the pedal-crank arms (1D, 1G) around a second axis (Dx) by means of an articulation unit (16),
- two second connecting-rods (19), articulated at one end in relation to the first connecting-rods (17) around a third axis (Bx) and of which the second end drives the ring-gear or gears (5) in rotation around the first axis (Cx).

4. A transmission system according to claim 1,
**characterised in that** the frame head (20) houses a shock absorber device.

5. A transmission system according to claim 1,
**characterised in that** the coupling includes
- two chains (3) fixed respectively on one of the pedal-crank arms (1D, 1G) and mating with a pinion ring gear (13bis, 4) linked in rotation around axis (Cx), transverse to the axis of the rear frame top tube (14) with a ring-gear ring gear (5) by means of a freewheel system (13) that can be placed in the pinions (4) of the associated ring gear (13bits);
- a differential system (15) arranged at the rear of the tube (14) so as to ensure reciprocity of the vertical movements of the pedal-crank arms (1D, 1G).

## Patentansprüche

1. Kraftübertragungssystem für Zweiräder folgendes umfassend:
- einen vorderen Rahmen (21), der einen Rahmenkopf (20) umfasst;
- eine hintere Gabel (11), die am Rahmenkopf (20) montiert ist;
- ein oberes Rohr des hinteren Rahmens (14), das am Rahmenkopf (20) befestigt ist und das eine erste Achse (Cx) umfasst, die quer zur Achse des oberen Rohrs liegt;
- Tretkurbelarme (1D; 1G), die am Ende von Wellen (2) angelenkt sind, die ihrerseits an einem Ende des oberen Rohrs des hinteren Rahmens (14) montiert sind;
- eine Kette (6), die dafür vorgesehen ist, die Kraft zwischen einem Kettenblatt (5) und Zahnritzelkassetten (8), die auf einem Hinterrad (25) montiert sind, zu übertragen;
- eine Kupplungsvorrichtung (3, 4, 5, 13, 13BIS, 15, 17, 19) zur Umwandlung einer Hin- und Her-Bewegung der Kurbelarme (1D; 1G) in eine Rotationsbewegung des einen oder der mehreren Kettenblätter (5), die mittels der Kette (6) und der Zahnritzelkassetten (8) an das Hinterrad (25) übertragen wird;
**dadurch gekennzeichnet, dass**
ein oder mehrere Zahnkranzkettenblätter (5) drehbar um die Achse (Cx) quer zur Achse des oberen Rohrs des hinteren Rahmens (14) montiert ist (sind), und **dadurch**, dass die Kupplungsvorrichtung zwischen den Kurbelarmen (1D, 1G) und der Achse (Cx) quer zur Achse des oberen Rohrs des hinteren Rahmens angeordnet ist.

2. Kraftübertragungssystem nach Anspruch 1, **dadurch gekennzeichnet, dass** die Kupplung folgendes umfasst:
- zwei Zahnstangen (3), die jeweils an einem der Kurbelarme (1D; 1G) befestigt sind und die mit einem zugehörigen Kranzteil (13BIS) mit Zahnritzeln (4) in Eingriff kommen, das drehbar um die Achse (Cx) quer zur Achse des oberen Rohrs des hinteren Rahmens (14) mit einem Zahnkranzkettenblatt (5) über ein jeweiliges Freilaufsystem (13) verbunden ist, das in den Zahnritzeln (4) des zugehörigen Kranzteiles (13BIS) aufgenommen werden kann;
- ein Differentialsystem (15), das am hinteren Teil des Rohrs (14) derart angeordnet ist, dass die Wechselseitigkeit der vertikalen Bewegungen der Kurbelarme (1 D; 1 G) gewährleistet ist.

3. Kraftübertragungssystem für Zweiräder nach Anspruch 1, **dadurch gekennzeichnet, dass** die Kupplung aus folgendem gebildet wird:
- zwei erste Pleuelstangen (17), die auf dem jeweiligen Kurbelarm (1D; 1G) drehbar um eine zweite Achse (Dx) mittels eines Lagergehäuses (16) befestigt sind,
- zwei zweite Pleuelstangen (19), die an einem Ende relativ zu den ersten Pleuelstangen (17) um eine dritte Achse (Bx) angelenkt sind und deren zweites Ende das oder die Zahnkranzkettenblätter (5) um die erste Achse (Cx) drehend antreibt.

4. Kraftübertragungssystem nach Anspruch 1, **dadurch gekennzeichnet, dass** der Rahmenkopf (20) eine Dämpfungsvorrichtung aufnimmt.

5. Kraftübertragungssystem nach Anspruch 1, **dadurch gekennzeichnet, dass** die Kupplung folgendes umfasst:
- zwei Ketten (3), die jeweils an einem der Kurbelarme (1 D; 1 G) befestigt sind und die mit einem zugehörigen Kranzteil (13BIS) mit Zahnritzeln (4) in Eingriff kommen, das drehbar um die Achse (Cx) quer zur Achse des oberen Rohrs des hinteren Rahmens (14) mit einem Zahnkranzkettenblatt (5) über ein jeweiliges Freilaufsystem (13) verbunden ist, das in den Zahnritzeln (4) des zugehörigen Kranzteiles (13BIS) aufgenommen werden kann;
- ein Differentialsystem (15), das am hinteren Teil des Rohrs (14) derart angeordnet ist, dass die Wechselseitigkeit der vertikalen Bewegungen der Kurbelarme (1 D; 1 G) gewährleistet ist.
